# EUROPÄISCHE PATENTANMELDUNG

(11) **EP 1 935 678 A2**
(43) Veröffentlichungstag der Anmeldung: **25.06.2008**
(21) Anmeldenummer: 07020180.1
(22) Anmeldetag: 16.10.2007
(51) Int. Cl.: B60G 15/06

(54) **Radaufhängung**

(30) Priorität: 18.12.2006 DE 102006060149; 18.04.2007 DE 102007018671; 12.08.2007 DE 102007038072
(71) Anmelder: Muhr und Bender KG, 57439 Attendorn (DE)
(72) Erfinder: Brandt, Robert, Dipl.-Phys. Dr. rer.nat, 57439 Attendorn (DE); Neubrandt, Jörg, Dipl.-Ing. Dr.-Ing., 57258 Freudenberg-Alchen (DE); Kriese, Hans-Ulrich, Dipl.-Ing., 99631 Weißensee (DE)
(74) Vertreter: Gesthuysen, von Rohr & Eggert

(57) **Zusammenfassung**

Beschrieben und dargestellt ist eine Radaufhängung mit einem einerseits mit der Karosserie (1) und andererseits mit dem Rad (2) verbundenen, eine Schraubendruckfeder (3) (= Tragfeder) und einen Stoßdämpfer (4) aufweisenden, radführenden Federbein (5) und mit einem Querlenker (6), wobei die Schraubendruckfeder (3) so gestaltet ist, daß durch die Schraubendruckfeder (3) Querkräfte zumindest teilweise kompensiert werden, die ohne die querkraftkompensierende Wirkung der Schraubendruckfeder (3) am Stoßdämpfer (4) auftreten.

Die erfindungsgemäße Radaufhängung ist gegenüber den bekannten Radaufhängungen, von denen die Erfindung ausgeht, unter dem Gesichtspunkt der Gewichtsreduzierung verbessert, und zwar dadurch, daß die Schraubendruckfeder (3) so gestaltet und/oder eingebaut ist, daß in der Schraubendruckfeder (3) die Beanspruchung auf beiden Seiten der Federmittellinie (7) bzw. der Federkraftwirkungslinie (9) zumindest annähernd, vorzugsweise exakt gleich groß ist. Dadurch ist die Möglichkeit geschaffen, das Gewicht zu reduzieren, durchaus um etwa 10 %.

## Beschreibung

Die Erfindung betrifft eine Radaufhängung mit einem einerseits mit der Karosserie und andererseits mit dem Rad verbundenen, eine Schraubendruckfeder (= Tragfeder) und einen Stoßdämpfer aufweisenden, radführenden Federbein und mit einem Querlenker, wobei die Schraubendruckfeder so gestaltet ist, daß durch die Schraubendruckfeder Querkräfte zumindest teilweise kompensiert werden, die ohne die querkraftkompensierende Wirkung der Schraubendruckfeder am Stoßdämpfer aufträten.

Bei Radaufhängungen der hier grundsätzlich in Rede stehenden Art, häufig auch McPherson-Radaufhängungen genannt, ist der bei anderen üblichen Radaufhängungen vorhandene obere Querlenker durch ein langhubiges Federbein ersetzt (LUEGER "LEXIKON DER TECHNIK", Band 12 "LEXIKON DER FAHRZEUGTECHNIK", 1967 Deutsche Verlags-Anstalt GmbH, Seite 425).

Bei den bekannten Radaufhängungen, von denen die Erfindung ausgeht, kann die Schraubendruckfeder zunächst konzentrisch zur Stoßdämpferachse angeordnet sein. Dabei muß dann die gesamte am oberen Abstützpunkt, also an der Karosserie auftretende Querkraft von der Kolbenstange des Stoßdämpfers aufgenommen werden. Das hat erhebliche Reibungskräfte am Kolben des Stoßdämpfers und infolgedessen eine ruckelnde Einfederung und Ausfederung zur Folge.

Um die auf die Kolbenstange des Stoßdämpfers wirkenden Querkräfte zu reduzieren, baut man seit längerer Zeit die Schraubendruckfeder so in das Federbein ein, daß die Federkraftwirkungslinie mit der Stoßdämpferachse einen spitzen Winkel bildet. Im Idealfall müßte der Winkel zwischen der Federkraftwirkungslinie der Schraubendruckfeder und der Stoßdämpferachse dem Winkel zwischen der Abstützwirkungslinie und der Stoßdämpferachse entsprechen. Dann wäre im normal belasteten Zustand die Kolbenstange des Stoßdämpfers weitgehend querkraftfrei. Nur beim Einfedern oder Ausfedern - um die statische Gleichgewichtslage = normal belasteter Zustand - würden Querkräfte auftreten. Im allgemeinen kann jedoch der Winkel zwischen der Federkraftwirkungslinie der Schraubendruckfeder und der Stoßdämpferachse nur kleiner als der Winkel zwischen der Abstützwirkungslinie und der Stoßdämpferachse realisiert werden, da die Durchgängigkeit des Stoßdämpfers durch die Schraubendruckfeder und eine hinreichende Freigängigkeit des Rades noch gewährleistet sein müssen.

Durch die ständige Verbreiterung der Reifen und die damit verbundene Verlagerung des Radaufstandspunktes nach außen treten immer größere Winkel zwischen der Abstützwirkungslinie und der Stoßdämpferachse auf, auf die die Federkraftwirkungslinie eingestellt werden müßte, wenn im normal belasteten Zustand die Kolbenstange des Stoßdämpfers querkraftfrei sein soll.

Da aus den dargelegten Gründen die Schraubendruckfeder in bezug auf die Stoßdämpferachse nicht so schräg gestellt werden kann, wie das eigentlich wünschenswert wäre, hat man bereits die Federkraftwirkungslinie gegenüber der Federmittellinie verschoben, und zwar durch Schrägstellung einer Endwindung oder beider Endwindungen, durch Verdickung der Endwindungen, durch Schrägstellung der Federteller oder durch Kombinationen der zuvor angesprochenen Maßnahmen. Damit ist in Grenzen erreicht worden, daß die Federkraftwirkungslinie am unteren Ende der Schraubendruckfeder weiter außen liegt als die Federmittellinie, während die Federkraftwirkungslinie und die Federmittellinie am oberen Ende der Schraubendruckfeder durch den Abstützpunkt gehen.

Da immer noch unbefriedigend gewesen ist, daß der erreichbare Winkel zwischen der Federkraftwirkungslinie und der Stoßdämpferachse noch nicht ausreicht, hat man die Schraubendruckfeder so gestaltet, daß durch die Schraubendruckfeder Querkräfte zumindest teilweise kompensiert werden, die ohne die querkraftkompensierende Wirkung der Schraubendruckfeder am Stoßdämpfer aufträten. Dazu wird verwiesen auf die deutsche Offenlegungsschrift 1 505 616, die eine Radaufhängung der in Rede stehenden Art mit einer Schraubendruckfeder offenbart, deren Federmittellinie im unbelasteten Zustand (unbelasteter Zustand = vor dem Einbau) einen etwa C-förmigen Verlauf hat, sowie vor allem auf die DE 37 43 450 C2 und die inhaltsgleiche EP 0 319 651 B1, die eine Radaufhängung der in Rede stehenden Art mit einer Schraubendruckfeder offenbaren, deren Federmittellinie im unbelasteten Zustand einen etwa S-förmigen Verlauf hat.

In der DE 37 43 450 C2 ist das zuvor angesprochene Problem "Querkräfte am Stoßdämpfer bzw. an der Kolbenstange des Stoßdämpfers" im einzelnen beschrieben und dargestellt, nämlich zunächst in Spalte 1, Zeile 26, bis Spalte 2, Zeile 13, und in Spalte 2, Zeile 37, bis Spalte 3, Zeile 18. Beschrieben und dargestellt ist in der DE 37 43 450 C2 auch die Maßnahme "Schraubendruckfeder, deren Federmittellinie im unbelasteten Zustand einen etwa C-förmigen Verlauf hat", und zwar in Spalte 2, Zeilen 14 bis 19, und Spalte 3, Zeilen 19 bis 35, unter Bezugnahme auf Fig. 5. In der DE 37 43 450 C2 ist insbesondere auch die Maßnahme "Schraubendruckfeder, deren Federmittellinie im unbelasteten Zustand einen etwa S-förmigen Verlauf hat" beschrieben und dargestellt, und zwar in Spalte 3, Zeilen 42 bis 64, und Spalte 4, Zeilen 1 bis 29, unter Bezugnahme auf Fig. 6. Die Maßnahme "Schraubendruckfeder, deren Federmittellinie im unbelasteten Zustand einen etwa S-förmigen Verlauf hat" ist das, was die DE 37 43 450 C2, ausgehend von dem im einzelnen beschriebenen Stand der Technik, lehrt, - als weiterer Beitrag zur Lösung der aufgezeigten Problematik "Querkräfte am Stoßdämpfer bzw. an der Kolbenstange des Stoßdämpfers". Radaufhängungen, die von der zuvor erläuterten Lehre der DE 37 43 450 C2 Gebrauch machen, die also eine Schraubendruckfeder aufweisen, deren Federmittellinie im unbelasteten Zustand einen etwa S-förmigen Verlauf hat, haben sich bereits millionenfach bewährt und zunehmend an Bedeutung gewonnen.

Einleitend ist ausgeführt, daß die Erfindung eine Radaufhängung betrifft, zu der u. a. eine Schraubendruckfeder gehört und bei der die Schraubendruckfeder vorzugsweise so gestaltet ist, daß durch die Schraubendruckfeder Querkräfte zumindest teilweise kompensiert werden, die ohne die querkraftkompensierende Wirkung der Schraubendruckfeder am Stoßdämpfer aufträten. Mit "bei der die Schraubendruckfeder so gestaltet ist, daß durch die Schraubendruckfeder Querkräfte zumindest teilweise kompensiert werden, ............." sind vor allem - aber keinesfalls ausschließlich - die zuvor im einzelnen beschriebenen Maßnahmen "Schraubendruckfeder, deren Federmittellinie im unbelasteten Zustand einen etwa C-förmigen Verlauf hat" und "Schraubendruckfeder, deren Federmittellinie im unbelasteten Zustand einen etwa S-förmigen Verlauf hat" gemeint. Diese Maßnahmen nehmen Bezug auf die Federmittellinien von Schraubendruckfedern. Einerseits sind bei Schraubendruckfedern Federmittellinien natürlich nicht körperlich vorhanden; körperlich vorhanden sind nur die einzelnen Federwindungen bzw. ist nur die Gesamtheit der Federwindungen. Andererseits gibt es, soweit bekannt, keine Definition für die Federmittellinien von Schraubendruckfedern. Deshalb soll nachfolgend dargestellt werden, wie einerseits die Federmittellinien von Schraubendruckfedern ermittelt werden können, worauf es andererseits ankommt, wenn auf die Federmittellinien von Schraubendruckfedern Bezug genommen wird.

Ein erstes Verfahren zur Ermittlung der Federmittellinien von Schraubendruckfedern ist dadurch gekennzeichnet, daß zunächst der Hüllmantel der Schraubendruckfeder konstruiert wird und daß dann aus dem konstruierten Hüllmantel die Hüllmantelmittellinie ermittelt wird, die mit der Federmittellinie gleichgesetzt wird. Dieses Verfahren ist allenfalls eingeschränkt anwendbar; es versagt insbesondere dort, wo Federwindungen mit sich änderndem Windungsdurchmesser vorliegen. Ein weiteres Verfahren zur Bestimmung der Federmittellinie von Schraubendruckfedern ist dadurch gekennzeichnet, daß aus dem arithmetischen Mittel der Windungspunkte jeweils Mittelpunkte der Federwindung bestimmt werden und daß die Verbindung der so bestimmten Mittelpunkte der Federwindungen die Federmittellinie darstellt. Schließlich kann die Federmittellinie von Schraubendruckfedern auch dadurch bestimmt werden, daß die Projektionen der einzelnen Federwindungen in einer Ebene betrachtet werden, daß als Mittelpunkt jeder Federwindung der Mittelpunkt eines Kreises angenommen wird, der an die Federwindung angenähert ist, und daß die so gewonnenen Mittelpunkte der Federwindungen miteinander verbunden werden.

Wenn auf die Federmittellinien von Schraubendruckfedern Bezug genommen wird, dann kommt es darauf an, welche Bedeutung die Federmittellinien für die Federkraftwirkungslinien von Schraubendruckfedern haben. Hat eine Schraubendruckfeder eine gerade Federmittellinie, so fällt die Federkraftwirkungslinie, die natürlich stets eine Gerade ist, mit der Federmittellinie zusammen. Bei einer Schraubendruckfeder, deren Federmittellinie einen etwa C-förmigen Verlauf hat, ist - im eingebauten Zustand ! - die Federkraftwirkungslinie gegenüber der - im eingebauten Zustand - gerade verlaufenden Federmittellinie verschoben (vgl. Fig. 5 der DE 37 43 450 C2). Demgegenüber gilt für eine Schraubendruckfeder, deren Federmittellinie im unbelasteten Zustand einen etwas S-förmigen Verlauf hat, daß im eingebauten Zustand die Federkraftwirkungslinie zur - im eingebauten Zustand gerade verlaufenden - Federmittellinie unter einem spitzen Winkel verläuft (vgl. dazu die Fig. 6 der DE 37 43 450 C2).

Im übrigen sei noch auf folgendes hingewiesen:

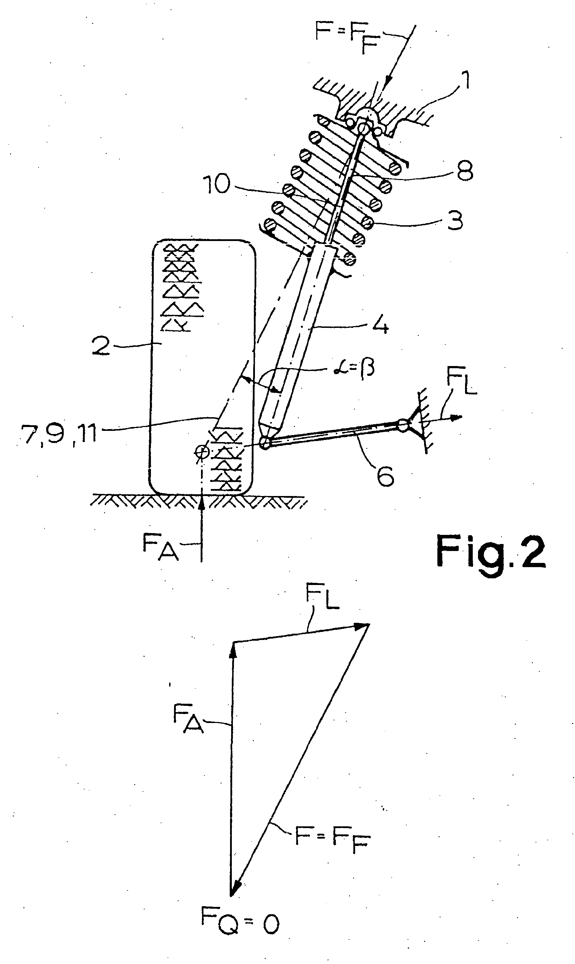

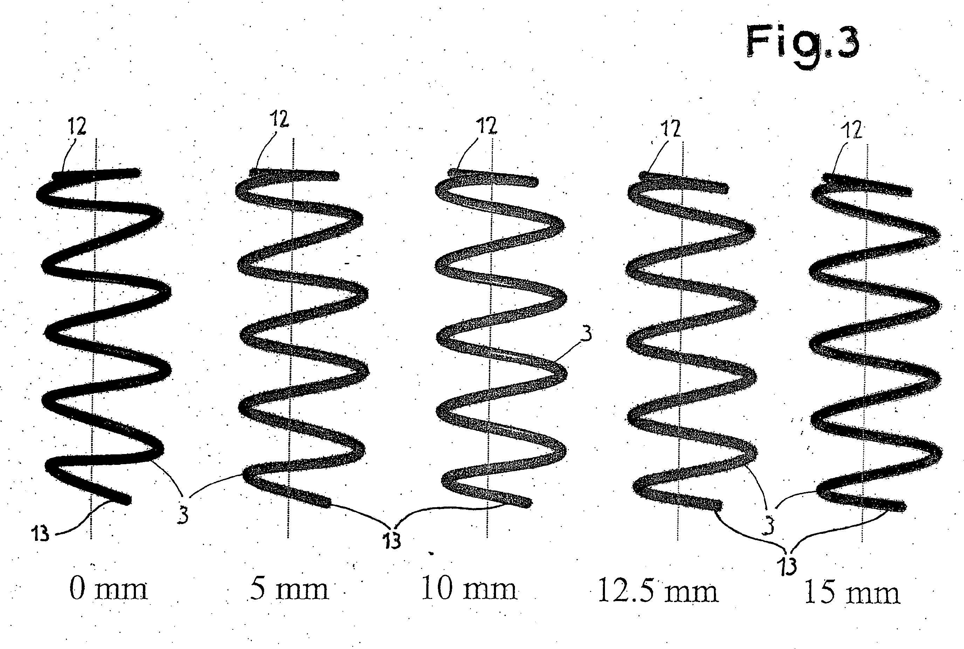

Unter Berücksichtigung dessen, was zuvor in bezug auf die Federkraftwirkungslinien von Schraubendruckfedern ausgeführt worden ist, liegt ein etwa C-förmiger Verlauf der Federmittellinie auch dann vor, wenn die Endwindungen der Schraubendruckfeder gegensinnig geneigt sind, der mittlere Teil der Schraubendruckfeder jedoch gerade verläuft (vgl. in der deutschen Offenlegungsschrift 1 505 616 die Schraubendruckfeder nach Fig. 2, die gleichwirkend ist zur Schraubendruckfeder nach Fig. 3). Das, was mit einer Schraubendruckfeder erreicht werden kann, deren Federmittellinie im unbelasteten Zustand einen etwa S-förmigen Verlauf hat, kann auch dadurch erreicht werden, daß - bei einem im übrigen geraden Verlauf der Federmittellinie - die Endwindungen der Schraubendruckfeder gleichsinnig geneigt sind. Schließlich kann das, was mit einer Schraubendruckfeder erreicht wird, deren Federmittellinie im unbelasteten Zustand einen etwa S-förmigen Verlauf hat, auch durch eine Schraubendruckfeder erreicht werden, deren Federmittellinie teilweise einen etwa C-förmigen Verlauf hat und deren dem C-förmigen Teil ferne Endwindung gegensinnig geneigt ist.

Neben dem zuvor im einzelnen beschriebenen Problem "Querkräfte am Stoßdämpfer bzw. an der Kolbenstange des Stoßdämpfers" gibt es bei Radaufhängungen der in Rede stehenden Art noch ein anderes Problem. Im System wirkende Kräfte und Momente verursachen nämlich eine zusätzliche Belastung an der Lenkung, die für die Lenkung eine destabilisierende Wirkung hat, bedingt durch die elastische Nachgiebigkeit des Systems, was sich aus folgendem ergibt:

In dem hier in Rede stehenden System wirken als Kräfte
a) die Radaufstandskraft, deren Richtung senkrecht zur Radaufstandsebene verläuft,
b) die Lenkerkraft, die in der Ebene des Querlenkers verläuft und durch den unteren Lagerpunkt geht, und
c) die Schraubendruckfederkraft, die in der Hauptbelastungsebene liegen sollte, wobei die Hauptbelastungsebene durch den oberen Lagerpunkt, durch den unteren Lagerpunkt und durch den Radaufstandspunkt bestimmt ist.

Liegt die Schraubendruckfederkraft nicht in der Hauptbelastungsebene, entsteht eine Reaktionskraft in Fahrtrichtung. Wäre der Querlenker absolut starr, so würde die in Fahrtrichtung wirkende Komponente der Schraubendruckfederkraft vom Querlenker aufgefangen. In Wirklichkeit ist die Radaufhängung jedoch insgesamt elastisch; der Querlenker und die Lenkung sind verformbar. Die in Fahrtrichtung wirkende Komponente der Schraubendruckfederkraft wird deshalb lediglich teilweise durch den Querlenker aufgefangen, teilweise wirkt sie in die Lenkung.

Üblicherweise gilt, daß die Antriebskräfte an der linken Fahrzeugseite und an der rechten Fahrzeugseite gleich groß sind, während die Reaktionskräfte, also die in Fahrtrichtung wirkenden Komponenten der Schraubendruckfederkraft, an den beiden Fahrzeugseiten üblicherweise unterschiedlich groß sind. Die Differenz zwischen den in Fahrtrichtung wirkenden Komponenten der Schraubendruckfederkräfte an der linken Fahrzeugseite und an der rechten Fahrzeugseite ist mit einer unterschiedlichen Neigung der Federkraftwirkungslinie infolge des Taumelns der Schraubendruckfederkraft zu erklären. Die Differenz zwischen den in Fahrtrichtung wirkenden Komponenten der Schraubendruckfederkräfte an der linken Fahrzeugseite und an der rechten Fahrzeugseite trägt dazu bei, daß in der Lenkung ein unerwünschtes, destabilisierendes Lenkmoment entsteht. Unter der Wirkung dieses destabilisierenden Lenkmoments wandert das Fahrzeug einseitig von der geraden Fahrt ab.

Zur Kompensation des zuvor erläuterten destabilisierenden Lenkmoments ist bereits vorgeschlagen worden, die Federkraftwirkungslinie gegenüber der Stoßdämpfermittellinie windschief verlaufen zu lassen. Erreicht wird dieser Verlauf, der im folgenden noch näher erläutert werden soll, bei einer durch die WO 01/56.819 A1 bekannten ersten Ausführungsform durch Schrägstellung der Schraubendruckfeder im Verhältnis zur Stoßdämpferachse in der Ebene senkrecht zur Fahrzeuglängsrichtung einerseits und durch einen S-förmigen oder C-förmigen Verlauf der Mittellinie in der Ebene in Fahrzeuglängsrichtung andererseits, bei einer durch die DE 101 25 503 C1 bekannten zweiten Ausführungsform durch einen etwa S-förmigen Verlauf der Federmittellinie der Schraubendruckfeder in einer senkrecht zur Fahrzeuglängsrichtung verlaufenden Ebene und einen etwa C-förmigen oder einen etwa S-förmigen Verlauf der Federmittellinie der Schraubendruckfeder in einer in Fahrzeuglängsrichtung verlaufenden Ebene, jeweils geltend für den unbelasteten Zustand der Schraubendruckfeder. Zu der zuletzt beschriebenen Ausführungsform folgendes:

Die senkrecht zur Fahrzeuglängsrichtung verlaufenden Ebenen seien mit XZ-Ebenen, die in Fahrzeuglängsrichtung verlaufenden Ebenen mit YZ-Ebenen bezeichnet. Davon ausgehend, soll mit einem windschiefen Verlauf der Federkraftwirkungslinie zur Stoßdämpfermittellinie gemeint sein, daß einerseits die Federkraftwirkungslinie schief zur Projektion der Federmittellinie an der XZ-Ebene, andererseits schief zur Projektion der Federmittellinie an der YZ-Ebene verläuft. (Projektion der Federmittellinie meint dabei immer die Projektion der Federmittellinie der eingebauten Schraubendruckfeder.) Dadurch, daß die Federkraftwirkungslinie schief zur Projektion der Federmittellinie an der XZ-Ebene verläuft, werden ansonsten auftretende Querkräfte am Stoßdämpfer bzw. an der Kolbenstange des Stoßdämpfers reduziert, während der Verlauf der Federkraftwirkungslinie schief zur Projektion der Federmittellinie an der YZ-Ebene die Kräfte reduziert bzw. minimiert bzw. eliminiert, die aus der Differenz zwischen den in Fahrtrichtung wirkenden Komponenten der Schraubendruckfederkräfte an der linken Fahrzeugseite und an der rechten Fahrzeugseite resultieren. Die dadurch, daß die Federkraftwirkungslinie annähernd schief zur Projektion der Federmittellinie an der YZ-Ebene verläuft, auftretenden Kräfte kompensieren zumindest teilweise die unerwünschten, destabilisierenden Kräfte, die ansonsten in die Lenkung geleitet werden, resultierend aus der Differenz zwischen den in Fahrtrichtung wirkenden Komponenten der Schraubendruckfederkräfte an der linken Fahrzeugseite und an der rechten Fahrzeugseite, wodurch die Geradeausfahrt des Fahrzeugs verbessert bzw. gewährleistet wird.

Die beschriebenen, aus der DE 37 43 450 C2 bzw. aus der DE 101 25 503 C1 bekannten Radaufhängungen haben sich außerordentlich bewährt, und zwar zig-millionenfach in verschiedenen Typen von Kraftfahrzeugen verschiedener Kraftfahrzeughersteller.

Seit vielen Jahren ist bei der Weiterentwicklung von Kraftfahrzeugen ein vorrangiges Ziel die Gewichtsreduzierung; mit dieser Zielrichtung werden auch viele Komponenten und Bauteile der Kraftfahrzeuge weiterentwickelt. Gewichtsreduzierung läßt sich vor allem einerseits durch den Einsatz spezifisch leichterer Materialien, z. B. Aluminium statt Stahl, andererseits durch eine höhere Beanspruchung - man kann auch sagen: bessere Ausnutzung - der verwendeten Materialien, schließlich aber auch durch gestalterische bzw. konstruktive Maßnahmen erreichen.

Der Erfindung liegt also die Aufgabe zugrunde, die aus der DE 37 43 450 C2 bekannte Radaufhängung bzw. die aus der DE 101 25 503 C1 bekannte Radaufhängung unter dem Gesichtspunkt der Gewichtsreduzierung zu verbessern.

Die erfindungsgemäße Radaufhängung, bei der die zuvor hergeleitete und aufgezeigte Aufgabe gelöst ist, ist zunächst und im wesentlichen dadurch gekennzeichnet, daß die Schraubendruckfeder so gestaltet und/oder eingebaut ist, daß in der Schraubendruckfeder die maximale Beanspruchung auf beiden Seiten der Federmittelinie bzw. der Federkraftwirkungslinie zumindest annähernd gleich groß ist. Das bedarf der Erläuterung:

Die Federkraft F_{F} der Schraubendruckfeder, die als Tragfeder, üblicherweise auch als Achsfeder bezeichnet wird, resultiert aus dem auf die einzelnen Radaufhängungen anteilig entfallenden Gewicht des Kraftfahrzeugs, also der Radaufstandskraft F_{A}, der Lenkerkraft F_{L}, der Karosserieabstützkraft F und der Querkraft F_{Q} (siehe dazu die Ausführungen in Spalte 2, Zeilen 42 bis 46 der DE 37 43 450 C2). Wie ausgeführt, gehört zu der in Rede stehenden Radaufhängung ein einerseits mit der Karosserie und andererseits mit dem Rad verbundenes, radführendes Federbein, wobei zu dem Federbein die Schraubendruckfeder und ein Stoßdämpfer gehören. Die Schraubendruckfeder ist dabei wirksam zwischen einem oberen Kraftangriffspunkt und einem unteren Kraftangriffspunkt. Konkret ist die Schraubendruckfeder wirksam zwischen einem oberen Federteller, der häufig gelenkig an der Karosserie abgestützt ist, und einem unteren Federteller, der mit dem Stoßdämpfer verbunden ist.

Die zu der erfindungsgemäßen Radaufhängung gehörende Schraubendruckfeder ist also - im eingebauten Zustand - zwischen dem oberen Federteller und dem unteren Federteller eingespannt. Dabei liegen die Endwindungen der Schraubendruckfeder am zugeordneten Federteller an, und zwar in ganz unterschiedlicher Weise, auch abhängig davon, wie stark die Schraubendruckfeder belastet ist, wie stark sie also eingefedert ist.

Unter einen Kraftangriffspunkt der Schraubendruckfeder versteht man den Schnittpunkt der Federkraftwirkungslinie mit einer Bezugsebene. Als den oberen Kraftangriffspunkt bezeichnet man deshalb den Schnittpunkt der Federkraftwirkungslinie mit der Ebene des oberen Federtellers und entsprechend als unteren Kraftangriffspunkt den Schnittpunkt der Federkraftwirkungslinie mit der Ebene des unteren Federtellers.

Zur Lehre der Erfindung gehört zunächst die Erkenntnis, daß bei Schraubendruckfedern, die im unbelasteten Zustand einen zumindest etwa C-förmigen Verlauf, einen zumindest etwa S-förmigen Verlauf oder einen teilweise etwa C-förmigen Verlauf und einen teilweise S-förmigen Verlauf haben, die maximale Beanspruchung auf beiden Seiten der Federmittelinie bzw. der Federkraftwirkungslinie unterschiedlich ist. Das gilt auch für bekannte Radaufliängungen, bei denen man die Federkraftwirkungslinie gegenüber der Federmittellinie durch andere als die weiter oben beschriebenen Maßnahmen verschoben bzw. verschwenkt hat, nämlich durch Schrägstellung einer Endwindung oder beider Endwindungen, durch Verdickung der Endwindungen, durch Schrägstellung der Federteller oder durch Kombinationen dieser Maßnahmen.

Alle im Stand der Technik bekannten, der Querkraftreduzierung bzw. der Querkraftkompensation dienenden Maßnahmen führen im allgemeinen dazu, daß die Federkraftwirkungslinie gegenüber der Federmittellinie verschoben wird. Folglich ist die Beanspruchung der Schraubendruckfeder auf der dem Rad abgewandten Seite größer als die Beanspruchung der Schraubendruckfeder auf der dem Rad zugewandten Seite. Die maximale Beanspruchung der Schraubendruckfeder auf der dem Rad abgewandten Seite bestimmt also im Stand der Technik die Auslegung der Schraubendruckfeder, insbesondere den Durchmesser des Federdrahtes und das Gewicht der Schraubendruckfeder. Dadurch, daß erfindungsgemäß die Schraubendruckfeder so gestaltet und/oder eingebaut ist, daß in der Schraubendruckfeder die Beanspruchung auf beiden Seiten der Federmittellinie bzw. der Federkraftwirkungslinie, also auf der dem Rad abgewandten Seite und auf der dem Rad zugewandten Seite, zumindest annähernd gleich groß ist, kann die Schraubendruckfeder günstiger dimensioniert werden.

Ein erster Weg, die zuvor erläuterte Lehre der Erfindung konkret zu realisieren, ist dadurch gekennzeichnet, daß mindestens eine Windung der Schraubendruckfeder, möglicherweise aber auch alle Windungen der Schraubendruckfeder einen zwischen einem Kleinstwert, einem Größtwert, und wieder dem Kleinstwert sich ändernden Federdrahtdurchmesser aufweist bzw. aufweisen. Vorzugsweise ändert sich der Federdrahtdurchmesser der Windung bzw. der Windungen je Windung genau einmal zwischen dem Kleinstwert, dem Größtwert und wieder dem Kleinstwert.

Die zuvor angegebene Realisierungsmöglichkeit der Lehre der Erfindung ist relativ aufwendig, weil mit einem besonderen Federdraht gearbeitet werden muß, nämlich mit einem solchen, bei dem sich der Federdrahtdurchmesser zwischen einem Kleinstwert, einem Größtwert und wieder dem Kleinstwert immer wieder ändert. Weniger aufwendig ist deshalb ein zweiter Weg, die zuvor erläuterte Lehre der Erfindung konkret zu realisieren, der dadurch gekennzeichnet ist, daß - vorzugsweise unter Berücksichtigung der Lage des oberen und des unteren Kraftangriffspunktes der Schraubendruckfeder - der Körper der Schraubendruckfeder so gestaltet ist, daß die Beanspruchung der Schraubendruckfeder bzw. die Beanspruchung in der Schraubendruckfeder auf beiden Seiten der Federmittellinie bzw. der Federkraftwirkungslinie zumindest annähernd gleich groß ist. Bei dieser Ausführungsform erfährt also der Körper der Schraubendruckfeder eine Verschiebung bzw. wird die Federmittellinie im Bereich der aktiven Windungen des Körpers der Schraubendruckfeder gegenüber der Federkraftwirkungslinie systematisch verschoben. Man kann von einem "Körper-Offset" sprechen. Vorzugsweise wird dabei so vorgegangen, daß zumindest annähernd, vorzugsweise exakt eine Hälfte der Schraubendruckfeder auf der dem Rad zugewandten Seite der Federkraftwirkungslinie und zumindest annähernd, vorzugsweise exakt die andere Hälfte der Schraubendruckfeder auf der dem Rad abgewandten Seite der Federkraftwirkungslinie realisiert ist.

Die Einstellung des oberen Kraftangriffspunktes und des unteren Kraftangriffspunktes geschieht durch Schrägstellung der Endwindungen der Schraubendruckfeder und/oder durch Ausformung der Federmittellinie, so daß diese im unbelasteten Zustand einen etwa C-förmigen oder S-förmigen oder einen teilweise etwa C-förmigen und teilweise etwa S-förmigen Verlauf hat.

Im einzelnen gibt es eine Mehrzahl von Möglichkeiten, die erfindungsgemäße Radaufhängung auszugestalten und weiterzubilden. In Verbindung mit der Zeichnung wird ein bevorzugtes Ausführungsbeispiel der erfindungsgemäßen Radaufhängung beschrieben. In der Zeichnung zeigen
- Fig. 1: eine grafische Darstellung zur Erläuterung einer Radaufhängung der in Rede stehenden Art und der dabei auftretenden Kräfte,
- Fig. 2: eine grafische Darstellung einer Radaufhängung, bei der Querkräfte nicht mehr auftreten, und
- Fig. 3: verschiedene Ausführungsformen von zu einer Radaufhängung der in Rede stehenden Art gehörenden Schraubendruckfedern.

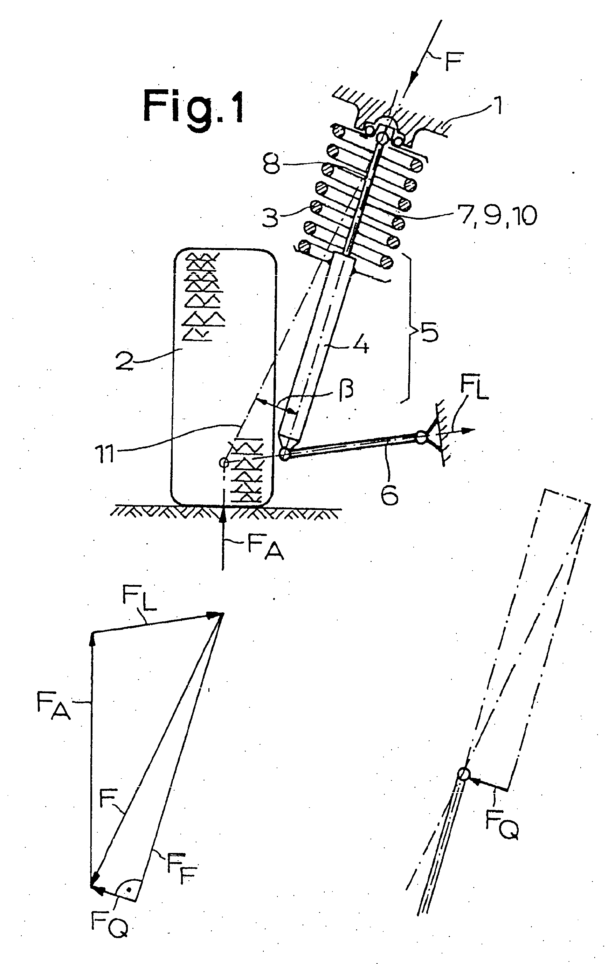

Zu der in den Fig. 1 und 2 dargestellten Radaufhängung gehört ein mit der Karosserie 1 und mit dem Rad 2 verbundenes, eine Schraubendruckfeder 3 (= Tragfeder bzw. Achsfeder) und einen Stoßdämpfer 4 aufweisendes, radführendes Federbein 5 sowie ein Querlenker 6. Eingezeichnet ist auch die Federmittellinie 7 der Schraubendruckfeder 3; dazu, daß bei Schraubendruckfedern Federmittellinien nicht körperlich vorhanden sind, und wie bei Schraubendruckfedern Federmittellinien ermittelt werden können, wird auf die weiter oben gemachten Ausführungen verwiesen.

Wie der Fig. 1 zu entnehmen ist, stellt sich zwischen verschiedenen Kräften ein Kräftegleichgewicht ein, nämlich zwischen der Radaufstandskraft F_{A}, der Lenkerkraft F_{L}, der Karosserieabstützkraft F, der Federkraft F_{F} und der Querkraft F_{Q}. Die unerwünschte, von der Kolbenstange 8 des Stoßdämpfers 4 aufzunehmende und zu Reibungskräften am Kolben des Stoßdämpfers 4 führende Querkraft F_{Q} resultiert daraus, daß der Winkel α zwischen der Federkraftwirkungslinie 9 der Schraubendruckfeder 3 und der Stoßdämpferachse 10 einerseits und der Winkel β zwischen der Abstützwirkungslinie 11 und der Stoßdämpferachse 10 andererseits nicht gleich sind, die Federkraftwirkungslinie 9 und die Abstützwirkungslinie 11 also nicht zusammenfallen.

Bei der in Fig. 2 dargestellten Radaufhängung, die wie die in Fig. 1 dargestellte Radaufhängung zum Stand der Technik gehört, sind der Winkel α zwischen der Federkraftwirkungslinie 9 der Schraubendruckfeder und der Stoßdämpferachse 10 einerseits und der Winkel β zwischen der Abstützwirkungslinie 11 und der Stoßdämpferachse 10 andererseits gleich groß; also fallen die Federkraftwirkungslinie 9 und die Abstützwirkungslinie 11 fallen zusammen. Daraus resultiert, daß die Schraubendruckfederkraft F_{F} und die Karosserieabstützkraft F gleich sind, die Querkraft F_{Q} also Null ist.

Weiter oben ist im einzelnen ausgeführt, daß bei Radaufhängungen der in Rede stehenden Art die Schraubendruckfeder so gestaltet ist, daß durch die Schraubendruckfeder Querkräfte zumindest teilweise kompensiert werden, die ohne die querkraftkompensierende Wirkung der Schraubendruckfeder am Stoßdämpfer aufträten. Auch bei der erfindungsgemäßen Radaufhängung ist die Schraubendruckfeder in der beschriebenen Weise gestaltet. Bei der erfindungsgemäßen Radaufhängung können auch die Maßnahmen verwirklicht sein, die weiter oben zur Kompensation des erläuterten destabilisierenden Lenkmoment beschrieben sind; diese Maßnahmen können auch verwirklicht sein, sie müssen aber nicht verwirklicht sein.

In dem in den Figuren dargestellten Ausführungsbeispiel einer erfindungsgemäßen Radaufhängung sind der obere und der untere Kraftangriffspunkt der Schraubendruckfeder 3 so gewählt, daß in der Schraubendruckfeder 3 die Beanspruchung auf beiden Seiten der Federmittellinie 7 bzw. der Federkraftwirkungslinie 9 zumindest annähernd gleich groß ist. Im dargestellten Ausführungsbeispiel hat also der Körper der Schraubendruckfeder 3 eine Verschiebung erfahren; man kann von einem "Körper-Offset" sprechen. Im einzelnen ist dabei so vorgegangen worden, daß zumindest annähernd, vorzugsweise exakt eine Hälfte der Schraubendruckfeder 3 auf der dem Rad 2 zugewandten Seite der Federkraftwirkungslinie 9 und zumindest annähernd, vorzugsweise exakt die andere Hälfte der Schraubendruckfeder 3 auf der dem Rad 2 abgewandten Seite der Federkraftwirkungslinie 9 realisiert ist.

Im dargestellten Ausführungsbeispiel ist der "Körper-Offset", also die bestimmte Wahl des oberen Kraftangriffspunkt und des unteren Kraftangriffspunkt der Schraubendruckfeder 3 dadurch realisiert, daß die Stellung der oberen Endwindung 12 der Schraubendruckfeder 3 entsprechend gewählt ist, also eine entsprechende Schrägstellung der oberen Endwindung 12 der Schraubendruckfeder 3 realisiert ist.

Dazu zeigt die Fig. 3 fünf verschiedene Ausführungsformen von zu einer Radaufhängung gehörenden Schraubendruckfedern 3, welche jeweils für sich im verbauten Zustand zu einer vollständigen Kompensation der Querkraft F_{Q} führen.

Bei der in der Fig. 3 links dargestellten Schraubendruckfeder 3 ist die Lehre der Erfindung nicht verwirklicht; der "Körper-Offset" beträgt 0 mm.

Bei den dann in der Fig. 3 dargestellten Schraubendruckfedern 3, also beginnend mit der zweiten von links, ist jeweils ein "Körper-Offset" verwirklicht, und zwar, wie angegeben, von 5 mm, von 10 mm, von 12,5 mm und 15 mm. Dadurch ist jeweils, in steigendem Maße, der obere Kraftangriffspunkt nach links verschoben und die - nicht eingezeichnete - Federkraftwirkungslinie entsprechend entgegen dem Uhrzeigersinn verschwenkt.

Versuche haben gezeigt, daß durch die erfindungsgemäße Maßnahme die maximale Beanspruchung in der Schraubendruckfeder 3 erheblich reduziert werden kann. Bei einer bestimmten Schraubendruckfeder 3, also mit bestimmten, immer gleichen Parametern, beträgt bei der in Fig. 3 links dargestellten Schraubendruckfeder 3 die maximale Beanspruchung 1344 MPa. Bei den anderen in Fig. 3 dargestellten Schraubendruckfedern nimmt die maximale Beanspruchung, bei den dargestellten Schraubendruckfedern 3 von links nach rechts, stetig ab, und zwar von 1293 MPa über 1243 MPa und über 1215 MPa bis nur noch 1197 MPa. Das heißt, daß die bestimmte Schraubendruckfeder 3, wie in Fig. 3 rechts dargestellt, massemäßig um 10 % reduziert werden kann; statt einer Masse von 2,26 kg wird noch eine Masse von 2,0 kg benötigt.

## Patentansprüche

1. Radaufhängung mit einem einerseits mit der Karosserie (1) und andererseits mit dem Rad (2) verbundenen, eine Schraubendruckfeder (3) (= Tragfeder) und einen Stoßdämpfer (4) aufweisenden, radführenden Federbein (5) und mit einem Querlenker (6), wobei die Schraubendruckfeder (3) so gestaltet ist, daß durch die Schraubendruckfeder (3) Querkräfte zumindest teilweise kompensiert werden, die ohne die querkraftkompensierende Wirkung der Schraubendruckfeder (3) am Stoßdämpfer (4) auftreten, und wobei vorzugsweise die Federkraftwirkungslinie (9) windschief zur Stoßdämpferachse (10) verläuft und die Schraubendruckfeder (3) im unbelasteten Zustand so gestaltet ist, daß die Endwindungen (12, 13) schräg gestellt sind und/oder die Federmittellinie (7) der Schraubendruckfeder (3) in einer senkrecht zur Fahrzeuglängsrichtung verlaufenden Ebene einen etwa C-förmigen oder etwa S-förmigen oder einen teilweise etwa C-förmigen und teilweise etwa S-förmigen Verlauf und in einer in Fahrzeugslängsrichtung verlaufenden Ebene einen etwa C-förmigen oder einen etwa S-förmigen oder einen teilweise etwa C-förmigen und teilweise etwa S-förmigen Verlauf hat,
**dadurch gekennzeichnet,**
**daß** die Schraubendruckfeder (3) so gestaltet und/oder eingebaut ist, daß in der Schraubendruckfeder (3) die Beanspruchung auf beiden Seiten der Federmittellinie (7) bzw. der Federkraftwirkungslinie (9) zumindest annähernd gleich groß ist.

2. Radaufhängung nach Anspruch 1, **dadurch gekennzeichnet, daß** mindestens eine Windung der Schraubendruckfeder, vorzugsweise alle Windungen der Schraubendruckfeder einen zwischen einem Kleinstwert, einem Größtwert und wieder dem Kleinstwert sich ändernden Federdrahtdurchmesser aufweist bzw. aufweisen.

3. Radaufhängung nach Anspruch 2, **dadurch gekennzeichnet, daß** sich der Federdrahtdurchmesser der Windung bzw. der Windungen je Windung genau einmal zwischen dem Kleinstwert, dem Größtwert und wieder dem Kleinstwert ändert.

4. Radaufhängung nach einem der Ansprüche 1 bis 3, **dadurch gekennzeichnet, daß** unter Berücksichtigung der Lage des oberen und des unteren Kraftangriffspunktes der Schraubendruckfeder (3) die Beanspruchung der Schraubendruckfeder (3) auf beiden Seiten der Federmittellinie (7) bzw. der Federkraftwirkungslinie (9) zumindest annähernd gleich groß ist.

5. Radaufhängung nach Anspruch 4, **dadurch gekennzeichnet, daß** die Federmittellinie (7) im Bereich der aktiven Windungen des Federkörpers gegenüber der Federkraftwirkungslinie (9) systematisch verschoben ist.

6. Radaufhängung nach Anspruch 4 oder 5, **dadurch gekennzeichnet, daß** zumindest annähernd, vorzugsweise exakt eine Hälfte der Schraubendruckfeder (3) auf der dem Rad (2) zugewandten Seite der Federkraftwirkungslinie (9) und zumindest annähernd, vorzugsweise exakt die andere Hälfte der Schraubendruckfedern (3) auf der dem Rad (2) gewandten Seite der Federkraftwirkungslinie (9) realisiert ist.

7. Radaufhängung nach einem der Ansprüche 1 bis 6, **dadurch gekennzeichnet, daß** die Stellung der oberen Endwindungen (12) der Schraubendruckfeder (3) so gewählt ist, daß in der Schraubendruckfeder (3) die Beanspruchung der beiden Seiten der Federmittellinie (7) bzw. der Federkraftwirkungslinie (9) zumindest annähernd gleich groß ist, vorzugsweise exakt gleich groß ist.
